(19) **Europäisches Patentamt / European Patent Office / Office européen des brevets**

(11) **EP 3 347 901 B1**

(12) **FASCICULE DE BREVET EUROPEEN**

(45) Date de publication et mention
de la délivrance du brevet:
**24.07.2019 Bulletin 2019/30**

(21) Numéro de dépôt: **16769895.0**

(22) Date de dépôt: **08.09.2016**

(51) Int Cl.:
**G21C 19/07** *(2006.01)* **G21C 19/40** *(2006.01)*
**G21F 5/012** *(2006.01)*

(86) Numéro de dépôt international:
**PCT/EP2016/071220**

(87) Numéro de publication internationale:
**WO 2017/042288 (16.03.2017 Gazette 2017/11)**

(54) **DISPOSITIF DE RANGEMENT AMELIORE POUR L'ENTREPOSAGE ET/OU LE TRANSPORT D'ASSEMBLAGES DE COMBUSTIBLE NUCLEAIRE**

VERBESSERTE LAGERVORRICHTUNG ZUM LAGERN UND/ODER TRANSPORTIEREN VON KERNBRENNELEMENTEN

IMPROVED STORAGE DEVICE FOR STORING AND/OR TRANSPORTING NUCLEAR FUEL ASSEMBLIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2015 FR 1558461**

(43) Date de publication de la demande:
**18.07.2018 Bulletin 2018/29**

(73) Titulaire: **TN International**
**78180 Montigny Le Bretonneux (FR)**

(72) Inventeurs:
• **TARDY, Marcel**
**78000 Versailles (FR)**
• **BRUT, Stéphane**
**78150 Le Chesnay (FR)**
• **ZAHRI, Nasser**
**95210 Saint Gratien (FR)**

(74) Mandataire: **Brevalex**
**95, rue d'Amsterdam**
**75378 Paris Cedex 8 (FR)**

(56) Documents cités:
EP-A1- 1 083 240      WO-A1-2009/058896
FR-A1- 2 627 622      FR-A2- 2 650 113
JP-A- 2001 108 788

**Description**

**DOMAINE TECHNIQUE**

La présente invention se rapporte au domaine du stockage et/ou du transport d'assemblages de combustible nucléaire de type PWR (de l'anglais « Pressurized Water Reactor ») qui peuvent être soit irradiés (cas du combustible UO2 ou MOX), soit non irradié lorsqu'il s'agit de combustible MOX.

**ETAT DE LA TECHNIQUE ANTERIEURE**

Un tel dispositif, également appelé « panier » ou « râtelier » de rangement, comprend une pluralité de logements adjacents chacun apte à recevoir un assemblage de combustible nucléaire.

Ce dispositif de rangement, destiné à être logé dans une cavité d'un emballage, est conçu afin de pouvoir remplir simultanément trois fonctions essentielles, qui vont être brièvement exposées ci-dessous.

Il s'agit en effet tout d'abord de la fonction de transfert thermique de la chaleur dégagée par les assemblages de combustible. Généralement, il est utilisé de l'aluminium ou l'un de ses alliages, en raison de ses bonnes propriétés de conduction thermique.

La seconde fonction concerne l'absorption neutronique, et le souci de maintenir la sous-criticité du dispositif de rangement lorsque celui-ci est chargé avec les assemblages de combustible. Ceci est réalisé en utilisant des matériaux absorbeurs de neutrons dits matériaux neutrophages, tels que le bore. Additionnellement, la sous-criticité peut également être assurée en ménageant des espaces susceptibles d'être remplis d'eau, par exemple à l'intérieur même des cloisons formant les logements du dispositif de rangement.

Enfin, la troisième fonction essentielle est relative à la résistance mécanique du dispositif, qui est principalement assurée par la présence d'éléments structurels, le plus fréquemment réalisés en acier. Il est noté que la résistance mécanique globale du dispositif doit être compatible avec les exigences réglementaires de sûreté pour le transport/entreposage de matières nucléaires, notamment en ce qui concerne les épreuves dites « de chute libre ».

Dans les documents FR 2 872 955 et FR 2 650 113, il est divulgué des paniers de rangement dans lesquels certaines des fonctions sont réalisées séparément, avec des éléments dissociés. Dans les solutions proposées par ces documents, pour chaque cloison, l'épaisseur des parois extérieures à base d'aluminium est fixée de façon à obtenir des performances satisfaisantes de conduction thermique. Cette épaisseur des deux parois extérieures dépend de l'épaisseur totale de la cloison, déterminée préalablement pour répondre aux objectifs de compacité de l'emballage, visant à loger le plus grand nombre possible d'assemblages de combustible dans un volume donné de la cavité de cet emballage.

Ensuite, dans le cas d'une conception telle que décrite dans le document FR 2 650 113, il est déterminé l'épaisseur des parois en matériau neutrophage situées entre les parois en aluminium, ainsi que la teneur de ces parois en éléments absorbeurs de neutrons. Le but est de vérifier la sous-criticité du colis formé par l'emballage dans lequel se trouvent le panier ainsi que les assemblages de combustible. Le critère recherché est habituellement un facteur de criticité $K_{eff} +3\sigma$ inférieur ou égal à 0,95.

Pour la détermination de ces épaisseurs, les calculs prennent en compte le cas où l'emballage est en configuration de chargement sous eau. L'eau qui est présente dans les logements du panier augmente la réactivité au sein du colis. Mais lorsque de l'eau s'introduit entre les parois en matériau neutrophage équipant les cloisons, cela permet d'améliorer l'efficacité des éléments absorbeurs de neutrons et ainsi de réduire les interactions neutroniques entre les assemblages. Les cloisons jouent alors un rôle d'isolement neutronique entre les logements.

Cependant, avec les solutions existantes, il s'avère compliqué de trouver un dimensionnement aboutissant à un compromis satisfaisant en termes de masse globale et de coûts. En effet, l'augmentation de l'épaisseur des parois en matériau neutrophage apparait comme la solution pour diminuer la teneur en éléments absorbeurs de neutrons dans ces parois, et ainsi réduire les coûts de celles-ci. Néanmoins, cela pénalise fortement la masse globale du panier, sans pour autant diminuer sensiblement la teneur nécessaire en éléments absorbeurs de neutrons pour répondre au critère de sous-criticité. Pour aboutir à des teneurs en éléments absorbeurs de neutrons satisfaisantes, il faudrait prévoir des épaisseurs de parois largement surdimensionnées, incompatibles avec les contraintes d'exploitation de l'emballage.

**EXPOSÉ DE L'INVENTION**

L'invention a donc pour but de remédier au moins partiellement aux inconvénients mentionnés ci-dessus, relatifs aux réalisations de l'art antérieur.

Pour ce faire, l'invention a pour objet un dispositif de rangement pour l'entreposage et/ou le transport d'assemblages de combustible nucléaire de type PWR, ledit dispositif étant destiné à être logé dans la cavité d'un emballage et comportant une pluralité de logements adjacents chacun destiné à recevoir un assemblage de combustible nucléaire, les logements étant délimités par des cloisons de séparation dont au moins l'une d'elles délimite de part et d'autre de celle-ci un premier logement et un second logement d'assemblage de combustible.

Selon l'invention, ladite cloison comprend :

- deux premières parois délimitant chacune en partie, respectivement avec sa surface extérieure, lesdits premier et second logements, les deux premières parois étant réalisées dans un premier matériau en alliage d'aluminium dépourvu d'éléments absorbeurs de neutrons, les deux premières parois délimitant entre elles un premier espace inter-paroi ;

- deux secondes parois agencées dans le premier espace inter-paroi et réalisées dans un second matériau comprenant des éléments absorbeurs de neutrons et distinct du premier matériau, chaque seconde paroi présentant une surface extérieure faisant face à l'une des deux premières parois, ainsi qu'une surface intérieure agencée de sorte que les deux surfaces intérieures des deux secondes parois se font face et délimitent entre elles un second espace inter-paroi, la distance entre les surfaces intérieure et extérieure de chaque seconde paroi définissant une épaisseur e2, tandis qu'une distance E est définie entre la surface extérieure de chaque seconde paroi et un plan médian de cloison parallèle aux premières et secondes parois, l'épaisseur e2 et la distance E répondant à la condition suivante :

$$0,1 \leq e2/E \leq 0,43$$

De manière surprenante, ce dimensionnement particulier permet d'assurer une fonction de sous-criticité satisfaisante tout en limitant :

- le volume / la masse des secondes parois, ce qui s'avère bénéfique pour répondre aux contraintes d'exploitation ;
- la teneur volumique en éléments absorbeurs de neutrons dans le second matériau, limitant ainsi les coûts d'achat / de production des secondes parois ;
- la quantité totale en éléments absorbeurs de neutrons, pour un gain financier non-négligeable ;
- la difficulté de qualification des éléments constitutifs, ce qui se traduit également par un gain financier ;
- les coûts des premières parois, qui sont des éléments conventionnels, courants dans l'industrie ;
- les difficultés d'obtention de bonnes caractéristiques de transfert thermique des premières parois, puisqu'elles sont dépourvues d'éléments absorbeurs de neutrons.

En d'autres termes, l'invention montre l'existence d'une gamme restreinte de dimensionnements des cloisons, permettant l'obtention de l'ensemble des avantages mentionnés ci-dessus. A cet égard, il est noté qu'il est connu l'existence d'une forte interaction entre la quantité d'atomes d'hydrogène situés dans la lame d'eau destinée à s'introduire dans le second espace inter-paroi en conditions de chargement / déchargement (ces atomes contribuant directement à la modération des neutrons), et la quantité d'éléments absorbeurs de neutrons dans les secondes parois, dans le but d'absorber des neutrons après qu'ils aient été modérés par la lame d'eau. Cependant, aucun élément de l'art antérieur ne permettait de prédire l'existence d'une telle gamme étroite de dimensionnements, répondant de manière très satisfaisante à l'ensemble des critères posés.

L'invention présente par ailleurs au moins l'une quelconque des caractéristiques optionnelles suivantes, prises isolément ou en combinaison.

Pour l'obtention d'un compromis encore plus performant, l'épaisseur e2 et la distance E répondent à la condition suivante :

$$0,15 \leq e2/E \leq 0,32$$

La distance E est comprise entre environ 20 et 30 mm.

Le second matériau comprend des éléments absorbeurs de neutrons pris parmi le bore et le cadmium, même si d'autres éléments absorbeurs de neutrons peuvent être envisagés, sans sortir du cadre de l'invention.

Chaque seconde paroi est plaquée contre la première paroi associée, par exemple en prenant la forme d'un revêtement déposé sur la surface intérieure de la première paroi.

Alternativement, un jeu J est présent entre chaque seconde paroi et la première paroi associée, le jeu J étant compris entre 1 et 5 mm. Cette gamme de valeurs procure une efficacité du séchage entre les deux parois, une fois l'emballage drainé.

Le dispositif de rangement présente un nombre de logements compris entre quatre à vingt-quatre logements, chaque logement étant destiné à recevoir un assemblage de combustible nucléaire.

Au moins l'un des logements présente une section en forme de quadrilatère.

Au moins certaines desdites cloisons sont réalisées à l'aide d'ensembles structurels à encoches, les ensembles structurels étant entrecroisés et empilés selon une direction d'empilement parallèle aux axes des logements.

Alternativement, au moins certaines desdites cloisons sont réalisées en partie à l'aide d'éléments tubulaires définissant chacun intérieurement l'un desdits logements, les parois de ces éléments tubulaires constituant lesdites premières parois des cloisons. Dans cette alternative, les secondes parois sont rapportées extérieurement sur les éléments tubulaires.

L'invention a également pour objet un emballage pour l'entreposage et/ou le transport d'assemblages de combustible nucléaire de type PWR, l'emballage comprenant une cavité dans laquelle est logé un dispositif de rangement tel que décrit ci-dessus.

Enfin, l'invention a pour objet un colis comprenant un tel emballage ainsi que des assemblages de combustible agencés dans les logements du dispositif de rangement de cet emballage.

D'autres avantages et caractéristiques de l'invention apparaîtront dans la description détaillée non limitative ci-dessous.

## BRÈVE DESCRIPTION DES DESSINS

Cette description sera faite au regard des dessins annexés parmi lesquels ;

- la figure 1 représente une vue en perspective d'un dispositif de rangement pour l'entreposage et/ou le transport d'assemblages de combustible nucléaire, selon la présente invention ;
- la figure 2 est une vue partielle en coupe prise selon le plan transversal P de la figure 1 ;
- la figure 3 représente une vue en coupe transversale d'une cloison du dispositif de rangement montré sur la figure 2 ;
- la figure 4 est un graphe comprenant trois courbes montrant la teneur en carbure de bore dans les secondes parois de la cloison, en fonction d'un rapport de dimensions associées à ces secondes parois ;
- les figures 5a et 5b montrent une première possibilité de conception pour les cloisons du dispositif de rangement ; et
- la figure 6 représente une seconde possibilité de conception pour les cloisons du dispositif de rangement.

## EXPOSÉ DÉTAILLÉ DE MODES DE RÉALISATION PRÉFÉRÉS

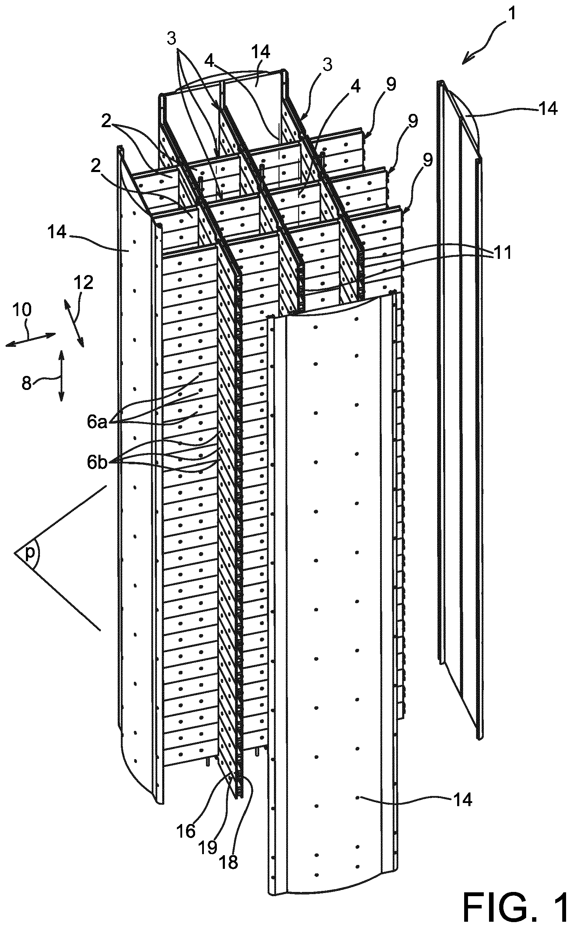

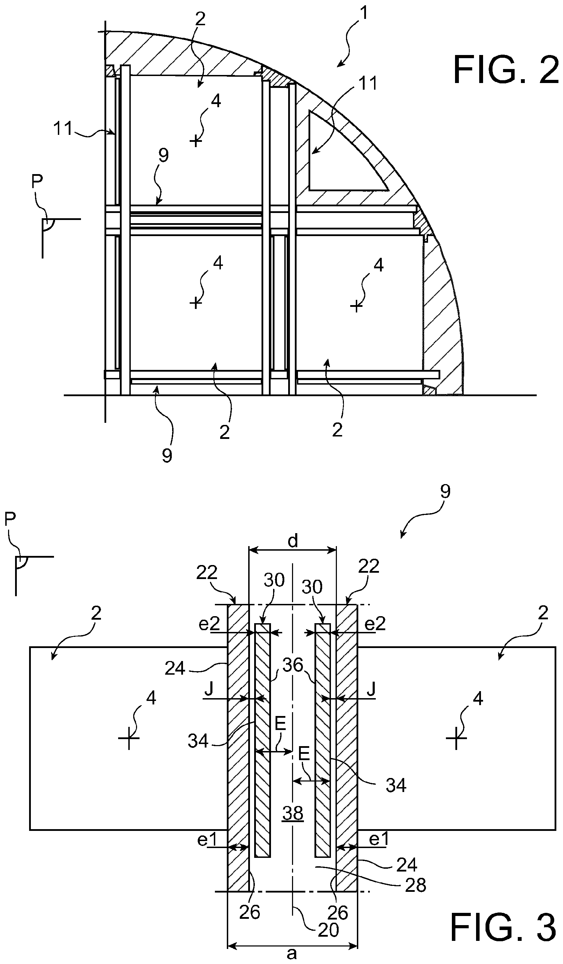

En référence aux figures 1 et 2, il est représenté un dispositif de rangement 1 prévu pour être placé dans la cavité d'un emballage (non représenté) destiné au transport et/ou entreposage d'assemblages de combustible nucléaire irradié de type PWR (non représentés). De manière conventionnelle, lorsque l'emballage reçoit le dispositif de rangement 1 et que celui-ci est chargé des assemblages de combustible irradié, l'ensemble de ces éléments forment un colis, qui est également objet de l'invention.

Comme visible sur les figures 1 et 2, le dispositif de rangement 1 comprend une pluralité de logements adjacents 2 disposés parallèlement, ces derniers s'étendant chacun selon un axe longitudinal 4. Les logements 2 sont chacun apte à recevoir au moins un assemblage de combustible de section carrée, et de préférence un seul. Les logements sont prévus dans un nombre compris entre quatre et vingt-quatre, par exemple douze logements comme sur la figure 1.

Les logements 2 sont donc prévus de manière à être juxtaposés les uns aux autres. Ils sont réalisés par l'intermédiaire d'une pluralité de cloisons de séparation 9, 11 parallèles aux axes 4, et également parallèles à un axe longitudinal de l'emballage traversant son fond et son couvercle. Les cloisons 9, 11 sont formées à l'aide d'ensembles structurels 6a, 6b à encoches, empilés selon une direction d'empilement 8 qui est de préférence parallèle aux axes longitudinaux 4 des logements 2. Par convention, dans la suite de la description, il est admis que la notion de « hauteur » est à associer à la direction d'empilement 8.

Les cloisons 9, 11 sont agencées de manière parallèle et perpendiculaire entre elles, en faisant en sorte que les ensembles 6a soient situés parallèlement les uns aux autres, tandis que les ensembles 6b sont également situés parallèlement les uns aux autres, mais perpendiculairement aux ensembles 6a.

Lorsque les ensembles structurels 6a, 6b sont empilés selon la direction d'empilement 8, les cloisons 9, 11 qui en résultent délimitent conjointement les logements 2, disposant chacun d'une section transversale de forme sensiblement carrée. Bien entendu, les logements 2 pourraient présenter toute autre forme autorisant le maintien d'un assemblage de combustible de forme différente, telles qu'une forme hexagonale.

Dans le dispositif de rangement 1 représenté sur les figures 1 et 2 où les logements 2 sont de section carrée, les ensembles structurels 6a forment des cloisons de séparation 9 parallèles à une direction 10, tandis que les ensembles structurels 6b forment des cloisons de séparation 11 parallèles à une direction 12, les directions 8, 10 et 12 étant perpendiculaires entre elles.

De manière préférée, chacun des ensembles 6a, 6b s'étend entre deux cloisons périphériques 14 auxquelles il est solidarisé, ces cloisons périphériques 14 permettant de fermer latéralement le dispositif de rangement 1. A titre d'exemple indicatif et comme représenté, ces cloisons périphériques 14 peuvent être prévues au nombre de quatre, s'étendre chacune sur toute la hauteur du dispositif 1, et délimiter en partie les logements périphériques 2 de ce dispositif 1.

Par ailleurs, comme cela ressort clairement de ce qui précède, les cloisons 9, 11 participent à la délimitation de plusieurs logements 2 de part et d'autre de celle-ci. A cet égard, la figure 3 montre une partie de l'une des cloisons de séparation 9, délimitant de part et d'autre de celle-ci un premier logement 2 ainsi qu'un second logement 2, leurs deux axes 4 étant situés dans un plan fictif orthogonal à celui de la cloison 9. Seuls deux logements 2 sont représentés sur la figure 3, mais comme mentionné précédemment, il est à comprendre que cette cloison 9 est de préférence prévue pour délimiter un ou plusieurs autres logements 2 de chaque côté de celle-ci. La cloison 9 de la figure 3 va à présent être décrite de façon détaillée, et il est à considérer que les autres cloisons 9, ainsi que les cloisons 11 précitées, présentent une conception identique ou similaire.

La cloison 9 présente une symétrie selon un plan médian 20 orthogonal au plan transversal P de la figure 1. De chaque côté de ce plan 20, la cloison 9 comporte une première paroi 22 parallèle au plan médian 20, et comprenant une surface extérieure 24 ainsi qu'une surface intérieure 26. La surface extérieure 24 délimite en partie le logement associé 2, tandis que les deux surfaces intérieures 26 des deux parois 22 délimitent entre elles un premier espace inter-paroi 28.

Les premières parois 22 sont réalisées dans un alliage d'aluminium dépourvu d'éléments absorbeurs de neutrons. Il est indiqué que par éléments absorbeurs de neutrons, il est entendu des éléments qui présentent une section efficace supérieure à 100 barns pour les neutrons thermiques. A titre d'exemples indicatifs, il s'agit d'alliage d'aluminium dépourvus de bore, de gadolinium, d'hafnium, de cadmium, d'indium, etc.

Dans le cas d'une conception à ensembles à encoches empilés et entrecroisés, chaque première paroi 22 est ainsi segmentée selon la direction de la hauteur du dispositif 1.

L'épaisseur e1 de chaque première paroi 22 est par exemple comprise entre 5 et 25 mm, tandis que la distance « a » séparant les deux surfaces extérieures 24 est de l'ordre de 40 à 100 mm, alors que la distance « d » séparant les deux surfaces intérieures 26 est de l'ordre de 30 à 60 mm.

Dans le premier espace inter-paroi 28, il est associé à chaque première paroi 22 une seconde paroi 30 parallèle au plan médian 20. Chaque paroi 30 comprend une surface extérieure 34 ainsi qu'une surface intérieure 36. La surface extérieure 34 fait face à la surface intérieure 26 de sa première paroi associée, tandis que les deux surfaces intérieures 36 se font face et délimitent entre elles un second espace inter-paroi 38.

Les secondes parois 30 sont réalisées dans un second matériau comprenant des éléments absorbeurs de neutrons, par exemple un alliage comprenant du carbure de bore ($B_4C$), de préférence un alliage à base d'aluminium.

Dans le cas d'une conception à ensembles à encoches empilés et entrecroisés, chaque seconde paroi 22 est également segmentée selon la direction de la hauteur du dispositif 1.

Dans le mode de réalisation présenté sur la figure 3, il est prévu un jeu J entre la surface intérieure 26 et la surface extérieure 34 lui faisant face. Ce jeu J est par exemple compris entre 1 et 5 mm, de manière à procurer une bonne efficacité du séchage entre les deux parois 22, 30, une fois l'emballage drainé. Alternativement, la seconde paroi 30 peut être plaquée contre la surface intérieure 26 de sa première paroi associée, de façon à limiter les infiltrations d'eau. Dans ce but, il peut être mis en oeuvre une technique de dépôt de la seconde paroi 30 sur la première paroi 22, par exemple de sorte que cette dernière prenne la forme d'un revêtement déposé sur la surface intérieure 26. Par exemple, il peut s'agir d'un composite comprenant une matrice métallique chargée de particules comprenant des éléments absorbeurs de neutrons.

L'épaisseur e2 de chaque première paroi 22 est par exemple comprise entre 2 et 10 mm, tandis que la distance « E » séparant la surface extérieure 34 du plan médian 20 est par exemple comprise entre 15 et 40 mm, et encore plus préférentiellement entre 20 et 30 mm.

L'une des particularités de l'invention réside dans le choix de dimensions pour l'épaisseur e2 et la distance E, de façon à ce qu'elles vérifient la condition $0,1 \leq e2/E \leq 0,43$, et plus préférentiellement $0,15 \leq e2/E \leq 0,32$, correspondant au cas où E est égal à 23,5mm et des valeurs de e2 pour lesquelles le Keff + 3σ est satisfait avec une teneur en carbure de bore ($B_4C$) maximale de 25%.

En effet, il a été constaté que ces gammes de rapports de dimensions conduisaient avantageusement à des cloisons répondant aux critères de coûts, de masse et de sous-criticité.

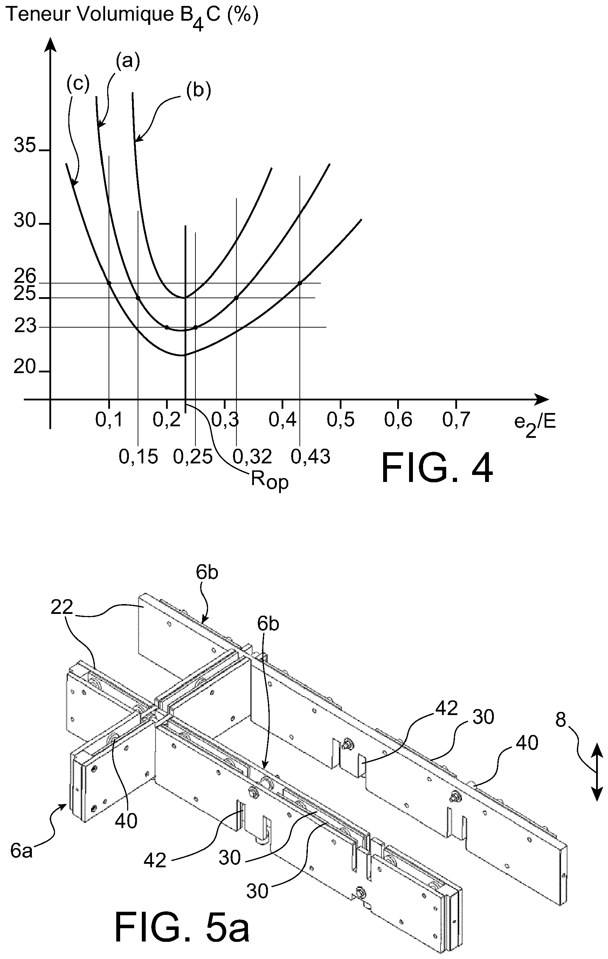

En référence à présent à la figure 4, il est montré un graphe sur lequel les courbes (a) et (b) et (c) représentent, en fonction du rapport e2/E, la teneur volumique en carbure bore dans un alliage d'aluminium nécessaire à l'obtention d'un facteur de criticité Keff + 3σ d'une valeur de 0,95.

Pour la courbe (a), la distance E est fixée à 23,5 mm, tandis que pour la courbe (b) la distance E est fixée à 20 mm, et pour la courbe (c) la distance E est fixée à 30 mm.

De manière surprenante, ces courbes montrent que pour des rapports e2/E compris entre 0,1 et 0,43, la teneur volumique en carbure de bore suffisante pour répondre au critère de sous-criticité ne dépasse pas 26%, ce qui permet de fabriquer les secondes parois 30 à un coût raisonnable.

De manière encore plus surprenante, ces courbes montrent que la teneur minimale pour satisfaire le critère de sous-criticité correspond à un rapport e2/E identique quel que soit la valeur de E, ce rapport optimal Rop étant sensiblement égal à 0,23. Les trois courbes sont ainsi décalées axialement, selon l'axe des ordonnées correspondant à la teneur en carbure de bore. Plus la valeur de E est élevée et plus la teneur volumique en carbure de bore requise est faible, et inversement.

Cette teneur est même réduite à près de 25% lorsque le rapport e2/E est égal à 0,23, et les valeurs de E supérieures à 20.

Pour des valeurs de E supérieures ou égales à 23,5 mm, cette teneur est encore réduite à moins de 23% lorsque le rapport e2/E est fixé entre 0,2 et 0,25.

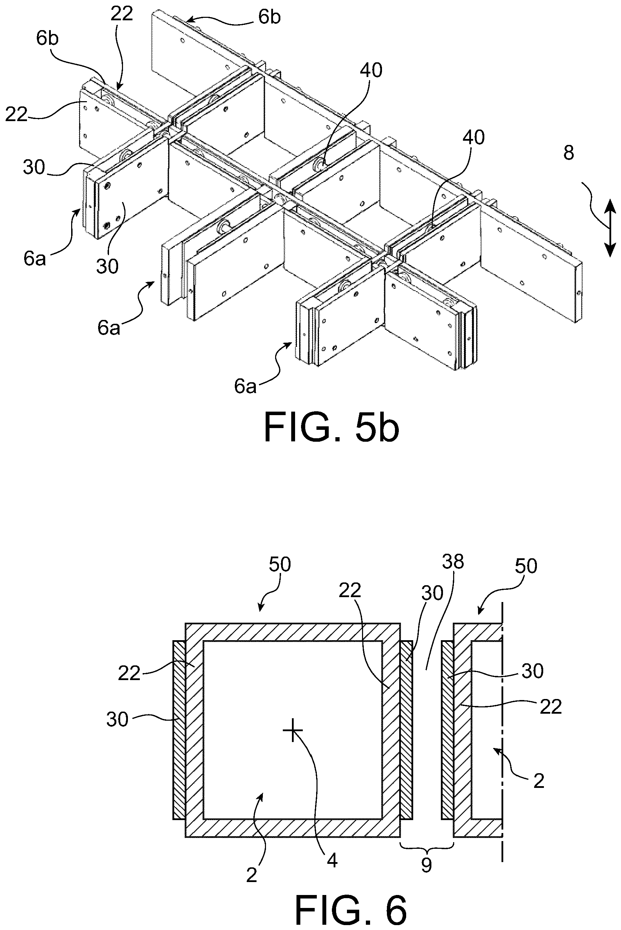

En référence à présent aux figures 5a et 5b, il est montré les ensembles 6a, 6b destinés à former les cloisons 9, 11, dans deux configurations distinctes au cours de leur assemblage. Ces ensembles 6a, 6b présentent chacun des entretoises 40 séparant les deux secondes parois 30. Ils sont équipés d'encoches 42 réalisées au niveau des premières parois 22, de manière à autoriser l'assemblage par empilement et entrecroisement, de la façon décrite dans le document FR 2 872 955. De plus, il est indiqué que les secondes parois 30 ne s'étendent pas au niveau des entrecroisements, de sorte qu'elles sont interrompues le long de chaque ensemble 6a, 6b. Cela permet d'engendrer un gain financier, sans pour autant fragiliser le critère de sous-criticité étant donné que les zones d'entrecroisements ne présentent qu'un faible impact sur le facteur de criticité.

Selon une autre forme de réalisation montrée sur la figure 6, il est prévu des éléments tubulaires 50, de section transversale carrée, définissant chacun l'un des logements 2. La totalité ou seulement certaines des quatre parois d'un élément tubulaire 50 forment les premières parois 22, qui sont revêtues extérieurement d'une seconde paroi 30. La cloison 9 est alors formée par les parties en regard de deux tubes adjacents 50.

Bien entendu, diverses modifications peuvent être apportées par l'homme du métier aux dispositifs de rangement 1 qui viennent d'être décrits, uniquement à titre d'exemples non limitatifs. L'invention est définie dans la revendication 1.

## Revendications

1. Dispositif de rangement (1) pour l'entreposage et/ou le transport d'assemblages de combustible nucléaire de type PWR, ledit dispositif étant destiné à être logé dans la cavité d'un emballage et comportant une pluralité de logements adjacents (2) chacun destiné à recevoir un assemblage de combustible nucléaire, les logements (2) étant délimités par des cloisons de séparation (9, 11) dont au moins l'une d'elles délimite de part et d'autre de celle-ci des premier et second logements (2),
ladite cloison (9, 11) comprenant:

   - deux premières parois (22) délimitant chacune en partie, respectivement avec sa surface extérieure (24), lesdits premier et second logements (2, 2), les deux premières parois (22) étant réalisées dans un premier matériau en alliage d'aluminium dépourvu d'éléments absorbeurs de neutrons, les deux premières parois délimitant entre elles un premier espace inter-paroi (28) ;
   - deux secondes parois (30) agencées dans le premier espace inter-paroi (28) et réalisées dans un second matériau comprenant des éléments absorbeurs de neutrons et distinct du premier matériau, chaque seconde paroi présentant une surface extérieure (34) faisant face à l'une des deux premières parois (22), ainsi qu'une surface intérieure (36) agencée de sorte que les deux surfaces intérieures (36) des deux secondes parois se font face et délimitent entre elles un second espace inter-paroi (38), la distance entre les surfaces intérieure (36) et extérieure (34) de chaque seconde paroi (30) définissant une épaisseur (e2), tandis qu'une distance (E) est définie entre la surface extérieure (34) de chaque seconde paroi et un plan médian de cloison (20) parallèle aux premières et secondes parois (22, 30),

   ledit dispositif étant **caractérisé par le fait que** l'épaisseur (e2) et la distance (E) répondent à la condition suivante :

$$0,1 \leq e2/E \leq 0,43$$

2. Dispositif de rangement selon la revendication 1, **caractérisé en ce que** l'épaisseur (e2) et la distance (E) répondent à la condition suivante :

$$0,15 \leq e2/E \leq 0,32$$

3. Dispositif de rangement selon la revendication 1 ou la revendication 2, **caractérisé en ce que** la distance (E) est comprise entre environ 20 et 30 mm.

4. Dispositif de rangement selon l'une quelconque des revendications précédentes, **caractérisé en ce que** le second matériau comprend des éléments absorbeurs de neutrons pris parmi le bore et le cadmium.

5. Dispositif de rangement selon l'une quelconque des revendications précédentes, **caractérisé en ce que** chaque seconde paroi (30) est plaquée contre la première paroi associée (22), par exemple en prenant la forme d'un revêtement déposé sur la surface intérieure (26) de la première paroi (22).

6. Dispositif de rangement selon l'une quelconque des revendications 1 à 4, **caractérisé en ce qu'**un jeu (J) est présent entre chaque seconde paroi (30) et la première paroi associée (22), le jeu (J) étant compris entre 1 et 5 mm.

7. Dispositif de rangement selon l'une quelconque des revendications précédentes, **caractérisé en ce qu'**il présente un nombre de logements (2) compris entre quatre à vingt-quatre logements, chaque logement étant destiné à recevoir un assemblage de combustible nucléaire.

8. Dispositif de rangement selon l'une quelconque des revendications précédentes, **caractérisé en ce qu'**au moins l'un des logements (2) présente une section en forme de quadrilatère.

9. Dispositif de rangement selon l'une quelconque des revendications précédentes, **caractérisé en ce qu'**au moins certaines desdites cloisons (9, 11) sont réalisées à l'aide d'ensembles structurels à encoches (6a, 6b), les ensembles structurels étant entrecroisés et empilés selon une direction d'empilement (8) parallèle aux axes (4) des logements (2).

10. Dispositif de rangement selon l'une quelconque des revendications 1 à 8, **caractérisé en ce qu'**au moins certaines desdites cloisons (9, 11) sont réalisées en partie à l'aide d'éléments tubulaires (50) définissant chacun intérieurement l'un desdits logements (2), les parois de ces éléments tubulaires constituant lesdites premières parois (22) des cloisons (9, 11).

11. Dispositif de rangement selon la revendication 10, **caractérisé en ce que** les secondes parois (30) sont rapportées extérieurement sur les éléments tubulaires (50).

12. Emballage pour l'entreposage et/ou le transport d'assemblages de combustible nucléaire de type PWR, l'emballage comprenant une cavité dans laquelle est logé un dispositif de rangement selon l'une quelconque des revendications précédentes.

13. Colis comprenant un emballage selon la revendication 12 ainsi que des assemblages de combustible agencés dans les logements du dispositif de rangement de cet emballage.


**Patentansprüche**

1. Speichervorrichtung (1) für die Zwischenspeicherung und/oder den Transport von Kernbrennstoffelementen vom Typ PWR, wobei die genannte Vorrichtung dafür bestimmt ist, im Hohlraum einer Verpackung untergebracht zu werden und eine Vielzahl von benachbarten Kammern (2) enthalten soll, die jeweils dazu bestimmt sind, ein Kernbrennstabbündel aufzunehmen. Die Kammern (2) werden durch Trennwände (9,11) begrenzt, wobei mindestens eine auf der einen und der anderen Seite die der ersten und der zweiten Kammer (2) begrenzt:
die genannte Trennwand (9,11) umfasst

     - zwei erste Wände (22), die jeweils einen Teil begrenzen, beziehungsweise mit ihrer Außenseite (24), die genannten ersten und zweiten Kammern (2,2); die beiden ersten Seitenwände (22) haben als Erstmaterial eine Aluminium-Legierung, die frei von Neutronen absorbierenden Elementen ist; die beiden ersten Seitenwände bilden zwischen sich einen ersten Zwischenwandraum(28);
     - zwei zweite Seitenwände (30), die im ersten Seitenzwischenraum (28) angeordnet sind und aus einem Neutronen absorbierenden Zweitmaterial gefertigt sind, das sich vom Erstmaterial unterscheidet. Jede zweite Seitenwand zeigt eine Außenfläche (34), die einer der beiden ersten Trennwände (22) gegenüberliegt, sowie eine innere Außenfläche (36) die derart angeordnet ist, dass die beiden inneren Außenflächen (36) der beiden zweiten Seitenwände gegenüber liegen und zwischen sich einen zweiten Seitenzwischenwandraum (38) begrenzen. Der Abstand zwischen den inneren (36) und äußeren Außenflächen (34) jeder zweiten Seitenwand (30) weist eine Stärke (e2) auf, indes ein Abstand (E) zwischen der Außenfläche (34) jeder zweiten Zwischenwand definiert ist und eine Mittelwandebene (20) parallel zur ersten und zweiten Seitenwand (22,30) definiert ist, wobei die besagte Vorrichtung durch die Tatsache gekennzeichnet ist, dass die Stärke (e2) und der Abstand (E) folgender Bedingung entsprechen:

$$0,1 \leq e2/E \leq 0,43$$

2. Speichervorrichtung gemäß Anforderung 1, die hinsichtlich der Stärke (e2) und des Abstandes (E) durch die folgende Bedingung charakterisiert ist:

$$0,15 \leq e2/E \leq 0,32$$

3. Speichervorrichtung gemäß Anforderung 1 oder Anforderung 2, charakterisiert durch einen Abstand (E) zwischen ca. 20 und 30mm.

4. Speichervorrichtung gemäß einer der vorhergehenden Anforderungen, charakterisiert dadurch, dass das zweite Material Neutronen absorbierende Elemente enthält, darunter Bor und Cadmium.

5. Speichervorrichtung gemäß einer der vorhergehenden Anforderungen, charakterisiert dadurch, dass jede zweite Seitenwand (30) gegen die erste verbundene Seitenwand (22) gedrückt wird, z.B. in Form einer Beschichtung, die auf der inneren Außenfläche (26) der ersten Seitenwand (22) aufgebracht ist.

6. Speichervorrichtung gemäß einer der Anforderungen 1 bis 4, die dadurch charakterisiert ist, dass ein Spielraum (J) zwischen jeder zweiten Wand (30) und der ersten verbunden Wand (22) vorhanden ist von 1 bis 5 mm Spiel(J).

7. Speichervorrichtung gemäß einer der vorhergehenden Anforderungen, die dadurch charakterisiert sind, dass sie über eine Anzahl von Kammern (2) zwischen 4 bis vierundzwanzig Kammern verfügt, wobei jede Kammer dazu bestimmt ist, ein nukleares Brennstabbündel aufzunehmen.

8. Speichervorrichtung gemäß einer der vorgenannten Anforderungen, die dadurch charakterisiert ist, dass mindestens eine der Kammern (2) einen viereckigen Querschnitt aufweist.

9. Speichervorrichtung gemäß einer der vorhergehenden Anforderungen, die dadurch charakterisiert ist, dass mindestens einige der genannten Trennwände (9,11) mit Hilfe von gekerbten Strukturelementen gefertigt wurden(6a,6b), wobei die Strukturelemente gemäß einer Stapelrichtung (8) parallel zu den Achsen (4) der Kammern (2) wechselseitig ineinandergreifen und gestapelt sind.

10. Speichervorrichtung gemäß einer der vorhergehenden Anforderungen 1 bis 8, die dadurch charakterisiert ist, dass mindestens einige der der genannten Trennwände (9,11) teilweise mit Hilfe von Rohrelementen (50) gefertigt sind, die jeweils eine der genannten Kammern (2) innen definieren, wobei die Wände dieser Rohrelemente die ersten Seitenwände (22) der Trennwände (9,11) bilden.

11. Speichervorrichtung gemäß Anforderung 10, die dadurch charakterisiert ist, dass die zweiten Trennwände (30) außen an den Rohrelementen (50) befestigt sind.

12. Verpackung für die Zwischenlagerung und/oder den Transport der Kernbrennstabbündel vom Typ PWR, die Verpackung enthält einen Hohlraum, in den eine Speichervorrichtung gemäß einer der vorgenannten Anforderungen eingebracht wird.

13. Kolli, eine Verpackung enthaltend gemäß Anforderung 12 sowie Kernbrennstabbündel, die in den Kammern der Speichervorrichtung dieser Verpackung untergebracht sind.

**Claims**

1. A storage device (1) for temporarily storing and/or transporting PWR type nuclear fuel assemblies, said device being intended to be housed in the cavity of a package and including a plurality of adjacent housings (2) each intended to receive a nuclear fuel assembly, the housings (2) being delimited by separating partitions (9, 11) at least one of which delimits on either side of the same first and second housings (2),
said partition (9, 11) comprising:

- two first walls (22) each partly delimiting, respectively with its external surface (24), said first and second housings (2, 2), both first walls (22) being made of a first material of aluminium alloy free of neutron absorbing elements, both first walls delimiting a first inter-wall space (28) therebetween;
- two second walls (30) arranged in the first inter-wall space (28) and made of a second material comprising neutron absorbing elements and distinct from the first material, each second wall having an external surface (34) facing one of both first walls (22), as well as an internal surface (36) arranged such that both internal surfaces (36) of both second walls are facing each other and delimit a second inter-wall space (38) therebetween, the distance between the internal (36) and external (34) surfaces of each second wall (30) defining a thickness (e2), whereas a distance (E) is defined between the external surface (34) of each second wall and a median partition plane (20) parallel to the first and second walls (22, 30),

said device being **characterised in that** the thickness (e2) and the distance (E) meet the following condition:

$$0.1 \leq e2/E \leq 0.43.$$

2. The storage device according to claim 1, **characterised in that** the thickness (e2) and the distance (E) meet the following condition:

$$0.15 \leq e2/E \leq 0.32.$$

3. The storage device according to claim 1 or claim 2, **characterised in that** the distance (E) is between 20 and 30 mm.

4. The storage device according to any of the preceding claims, **characterised in that** the second material comprises neutron absorbing elements chosen from boron and cadmium.

5. The storage device according to any of the preceding claims, **characterised in that** each second wall (30) is pressed against the first associated wall (22), taking for example the form of a coating deposited onto the internal surface (26) of the first wall (22).

6. The storage device according to any of claims 1 to 4, **characterised in that** a clearance (J) is present between each second wall (30) and the first associated wall (22), the clearance (J) being between 1 and 5 mm.

7. The storage device according to any of the preceding claims, **characterised in that** it has a number of housings (2) between four and twenty-four housings, each housing being intended to receive a nuclear fuel assembly.

8. The storage device according to any of the preceding claims, **characterised in that** at least one of the housings (2) has a quadrilateral shaped cross-section.

9. The storage device according to any of the preceding claims, **characterised in that** at least some of said partitions (9, 11) are made using notched structural assemblies (6a, 6b), the structural assemblies being interlaced and stacked along a stacking direction (8) parallel to the axes (4) of the housings (2).

10. The storage device according to any of claims 1 to 8, **characterised in that** at least some of said partitions (9, 11) are partly made using tubular elements (50) each internally defining one of said housings (2), the walls of these tubular elements making up said first walls (22) of the partitions (9, 11).

11. The storage device according to claim 10, **characterised in that** the second walls (30) are externally secured to the tubular elements (50).

12. A package for temporarily storing and/or transporting PWR type nuclear fuel assemblies, the package comprising a cavity in which a storage device according to any of the preceding claims is housed.

13. A pack comprising a package according to claim 12 as well as fuel assemblies arranged in the housings of the storage device of this package.

FIG. 1

FIG. 2

FIG. 3

Teneur Volumique B$_4$C (%)

FIG. 4

FIG. 5a

FIG. 5b

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2872955

- FR 2650113